# EUROPÄISCHE PATENTSCHRIFT

(11) **EP 2 756 650 B1**
(45) Veröffentlichungstag und Bekanntmachung des Hinweises auf die Patenterteilung: **22.01.2020**
(21) Anmeldenummer: 12756746.9
(22) Anmeldetag: 12.09.2012
(51) Int. Cl.: H04L 29/08, H04L 12/40, G06F 13/40

(54) **VORRICHTUNG ZUM VERTEILEN VON DATEN ÜBER EIN FAHRZEUG**
DEVICE FOR DISTRIBUTING DATA ABOUT A VEHICLE
DISPOSITIF DE DISTRIBUTION DE DONNÉES RELATIVES À UN VÉHICULE

(30) Priorität: 12.09.2011 DE 102011082525
(43) Veröffentlichungstag der Anmeldung: 23.07.2014
(73) Patentinhaber: Continental Teves AG & Co. OHG, 60488 Frankfurt am Main (DE)
(72) Erfinder: GÜNTHNER, Stefan, 60489 Frankfurt (DE); RINK, Klaus, 63517 Rodenbach (DE); STÄHLIN, Ulrich, 65760 Eschborn (DE); KUNZ, Jürgen, 60318 Frankfurt/Main (DE)
(86) Internationale Anmeldenummer: PCT/EP2012/067844
(87) Internationale Veröffentlichungsnummer: WO 2013/037827

(56) Entgegenhaltungen:
- WO-A1-2009/027244
- WO-A2-2008/095117
- DE-A1-102007 047 337
- DE-A1-102008 061 304
- DE-A1-102009 028 813
- US-A1- 2007 276 566
- TING-YING WEI ET AL: "Implementation of In-vehicle Multi-sensor Information Fusion Gateway for Cooperative Driving", INTELLIGENT SYSTEMS, MODELLING AND SIMULATION (ISMS), 2011 SECOND INTERNATIONAL CONFERENCE ON, IEEE, 25. Januar 2011 (2011-01-25), Seiten 19-24, XP031930731, DOI: 10.1109/ISMS.2011.13 ISBN: 978-1-4244-9809-3

## Beschreibung

Die Erfindung betrifft eine Vorrichtung zum Verteilen von Daten über ein Fahrzeug, ein Bordnetz mit der Vorrichtung und ein Fahrzeug mit dem Bordnetz.

In derzeitigen Fahrzeugarchitekturen sind Sensoren und/oder Sensorelemente primär bestimmten Funktionen und/oder bestimmten Funktionseinrichtungen zugeordnet.

Das Dokument DE 10 2008 061 304 A1 offenbart die Verwendung einer Zündschlüsselfunktechnik zusätzlich zu WLAN-basierter Kommunikation in einem Fahrzeug, um mit anderen Fahrzeugen zu kommunizieren. Hierbei werden mittels der Zündschlüsselfunktechnik nur ausgewählte Daten gesendet, die sich signifikant verändert haben.

Das Dokument WO 2009/027244 A1 offenbart ein Verfahren und eine Vorrichtung zum Detektieren einer Verkehrssituation in einem Fahrzeug, wobei Sensoren des Fahrzeugs verwendet werden und eine Fahrzeug-zu-Fahrzeug-Kommunikation mit anderen Fahrzeugen aufgebaut wird.

Die Veröffentlichung von TING-YING WEI ET AL, "Implementation of In-vehicle Multi-sensor Information Fusion Gateway for Cooperative Driving",INTELLIGENT SYSTEMS, MODELLING AND SIMULATION (ISMS), 2011 SECOND INTERNATIONAL CONFERENCE ON, IEEE, 25. Januar 2011, Seiten 19-24, XP031930731, offenbart ein Fahrzeuggateway mit Schnittstellen zu einem GPS-Empfänger und einer Kommunikationseinheit zur Fahrzeug-zu-Fahrzeug- und Fahrzeug-zu-Infrastruktur-Kommunikation.

Es ist Aufgabe die Fahrzeugarchitektur zu verbessern.

Die Aufgabe wird von den Merkmalen der unabhängigen Ansprüche gelöst. Bevorzugte Weiterbildungen sind Gegenstand der abhängigen Ansprüche.

Der unabhängige Anspruch 1 umfassst ein Bordnetz. Ein Teilaspekt des beanspruchten Bordnetzes ist eine Vorrichtung zum Verteilen wenigstens von Daten über ein Fahrzeug eine erste Sensordaten-Empfangsschnittstelle zum Empfangen von ersten Sensordaten aus einem ersten Sensor, eine zweite Sensordaten-Empfangsschnittstelle zum Empfangen von zweiten Sensordaten aus einem zweiten Sensor und eine Sende-Schnittstelle zum Übertragen der Daten über das Fahrzeug basierend auf den ersten Sensordaten und den zweiten Sensordaten an einen Empfänger.

In einer Weiterbildung der angegebenen Vorrichtung ist die erste Sensordaten-Empfangsschnittstelle zum Empfangen von Positionsdaten aus einem Positionsdatensensor als ersten Sensor vorgesehen.

In einer zusätzlichen Weiterbildung der angegebenen Vorrichtung sind die Daten über das Fahrzeug eine Bewegung des Fahrzeugs beschreibende Bewegungsdaten.

In einer anderen Weiterbildung der angegebenen Vorrichtung ist die zweite Sensordaten-Empfangsschnittstelle eine Datenbus-Schnittstelle zum Empfangen der zweiten Sensordaten aus dem zweiten Sensor vorgesehen, der an einen Datenbus angeschlossen ist.

In einer noch anderen Weiterbildung der angegebenen Vorrichtung sind die zweiten Sensordaten Lenkwinkeldaten aus einem Lenkwinkelsensor als zweiter Sensor.

In einer besonderen Weiterbildung der angegebenen Vorrichtung umfasst die Sende-Schnittstelle eine Fusionseinrichtung zum Verknüpfen der ersten Sensordaten und der zweiten Sensordaten.

In einem bevorzugten Aspekt umfasst die Sendeschnittstelle ein Filter zum Filtern der Daten über das Fahrzeug aus verknüpften Positionsdaten und Sensordaten.

Gemäß einem weiteren Aspekt der Erfindung umfasst das Bordnetz des Anspruchs 1 einen Datenbus, einen an den Datenbus angeschlossenen Sensor, der eingerichtet ist, Sensordaten in den Datenbus einzuspeisen und eine an den Datenbus angeschlossene angegebene Vorrichtung zum Verteilen wenigstens von Daten über ein Fahrzeug basierend auf den Sensordaten.

Dieses Bordnetz umfasst auch eine Car2X-Antenne zum drahtlosen Übertragen der Daten über das Fahrzeug.

Gemäß einem weiteren Aspekt der Erfindung umfasst ein Fahrzeug das Bordnetz des unabhängigen Anspruchs 1.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines Ausschnittes aus einem Fahrzeugbordnetz;
Fig. 2 eine schematische Ansicht eines Ausschnittes aus einem alternativen Fahrzeugbordnetz;
Fig. 3 eine schematische Ansicht eines Ausschnittes aus einem alternativen Fahrzeugbordnetz;
Fig. 4 eine schematische Ansicht eines Ausschnittes aus einem alternativen Fahrzeugbordnetz;
Fig. 5 eine schematische Ansicht eines Ausschnittes aus einem alternativen Fahrzeugbordnetz;
Fig. 6 eine schematische Ansicht eines Ausschnittes aus einem alternativen Fahrzeugbordnetz;
Fig. 7 eine schematische Ansicht eines Ausschnittes aus einem alternativen Fahrzeugbordnetz;
Fig. 8 eine schematische Ansicht eines Ausschnittes aus einem alternativen Fahrzeugbordnetz; und
Fig. 9 eine schematische Ansicht eines Ausschnittes aus einem alternativen Fahrzeugbordnetz zeigen.

In den Figuren werden gleiche technische Elemente mit gleichen Bezugszeichen versehen und nur einmal beschrieben.

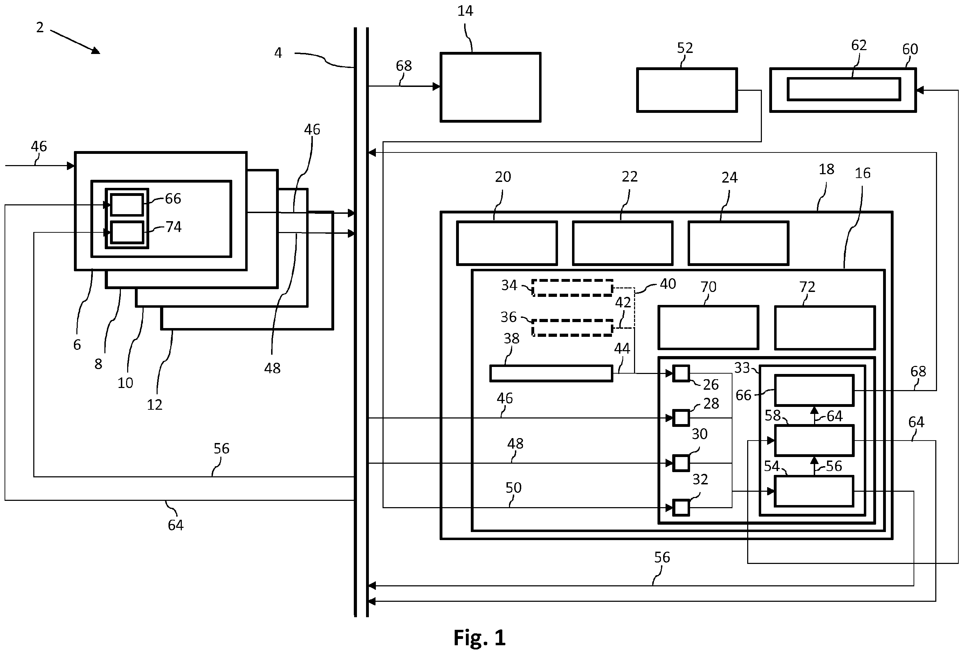

Es wird auf Fig. 1 Bezug genommen, die eine schematische Ansicht eines Ausschnittes aus einem Bordnetz 2 für ein nicht weiter dargestelltes Fahrzeug zeigt.

Das Boardnetz 2 umfasst einen Datenbus 4, bei dem sich beispielsweise um einen dem Fachmann bekannten Controller Area Network-Bus, CAN-Bus genannt, oder einen dem Fachmann bekannten FlexRay-Bus handeln kann. Diese Datenbusse sind standardisiert und ihre Funktionsweise kann in den einschlägigen Spezifikationen nachgeschlagen werden.

An den Datenbus 4 sind verschiedene Module angeschlossen, die alle miteinander über den Datenbus 4 kommunizieren. Zu diesen Modulen zählen Steuergerät 6 für eine elektronische Stabilitätskontrolle des nicht weiter dargestellten Fahrzeuges, nachstehend ESC-Steuergerät 6 genannt, ein Steuergerät 8 für eine elektronische Lenkwinkelunterstützung des nicht weiter dargestellten Fahrzeuges, nachstehend EPS-Steuergerät 8 genannt, ein Steuergerät 10 für einen Airbag des nicht weiter dargestellten Fahrzeuges und weitere Steuergeräte 12 im nicht weiter dargestellten Fahrzeug, für die nachstehend das Bezugszeichen 12 gemeinsam verwendet werden soll. Unter diese weiteren Steuergeräte 12 fallen ein Steuergerät für einen elektronischen Bremsassistenten, ein Steuergerät für einen elektronischen Lenkassistenten und ein Steuergerät für eine automatische Geschwindigkeitsregelung.

An den Datenbus 4 ist ferner Anzeigegerät 14 angeschlossen, das nachstehend HMI-Gerät 14 für "Human Machine Interface"-Gerät genannt werden soll. Es kann in nicht gezeigter Weise auch Daten in den Datenbus 4 einspeisen, wenn das HMI-Gerät 14 beispielsweise als Touchscreen ausgebildet ist.

Schließlich ist an den Datenbus 4 auch eine Vorrichtung 16 zum Verteilen von Daten über das nicht gezeigte Fahrzeug angeschlossen, die nachstehend M2XPro-Vorrichtung 16 für "motion information to different providers"-Vorrichtung 16 genannt werden soll.

Die M2XPro-Vorrichtung 16 ist in einen M2XPro-Cluster 18 eingebettet, der der M2XPro-Vorrichtung 16 eine elektrische Energieversorgung 20, Hardwareschnittstellen und Schutzmittel 22 und ein Gehäuse 24 bereitstellt.

Die M2XPro-Vorrichtung 16 weist eine Fahrdynamikschnittstelle 26, eine Raddrehzahlschnittstelle 28, eine Lenkwinkelschnittstelle 30, eine Global Position System-Schnittstelle 32, nachstehend GPS-Schnittstelle 32 genannt, und eine Ausgangsschnittstelle 33 auf.

An der Fahrdynamikschnittstelle 26 werden Fahrdynamikdaten empfangen, die von einem optionalen Nickratensensor 34, einem optionalen Rollratensensor 36 und einem Gierratensensor 38 in einer dem Fachmann bekannten Weise bereitgestellt werden. Im Einzelnen umfassen die Fahrdynamikdaten daher eine optionale Nickrate 40, eine optionale Rollrate 42 und eine Gierrate 44. In nicht dargestellter Weise können noch von einem Längs-, Quer- und Vertikalbeschleunigungssensor entsprechend eine Längs-, Quer- und Vertikalbeschleunigung über die Fahrdynamikschnittstelle 26 empfangen werden.

An der Raddrehzahlschnittstelle 28 können in einer noch zu beschreibenden Weise die Raddrehzahlen 46 der einzelnen Räder des nicht weiter dargestellten Fahrzeuges empfangen werden.

An der Lenkwinkelschnittstelle 30 kann in einer noch zu beschreibenden Weise ein Lenkwinkel 48 von einem Lenkrad des nicht weiter dargestellten Fahrzeuges empfangen werden.

Schließlich können an der GPS-Schnittstelle 32 Positionsdaten 50 von einem GPS-Empfänger 52 empfangen werden, der außerhalb des M2XPro-Clusters 18 angeordnet sein kann.

Die über die verschiedenen zuvor genannten Empfangsschnittstellen 26 bis 32 empfangenen Empfangsdaten 40 bis 50 werden die Ausgangsschnittstelle 33 geliefert, die in der vorliegenden Ausführung über die reine Abgabe der Daten 40 bis 50 an andere Module hinaus auch die Umformung der Empfangsdaten 40 bis 50 in noch zu schreibende Sendedaten erfüllt. Dazu weist die Ausgangsschnittstelle 33 in der vorliegenden Ausführung eine Fusionseinrichtung 54 auf, der die Empfangsdaten 40 bis 50 empfängt und basierend auf diesen die oben genannten Daten über das nicht gezeigte Fahrzeug erzeugt.

Diese Daten können beliebige Informationen über das Fahrzeug sein. So können diese Informationen beispielsweise abgesicherte Daten umfassen, die aufgrund redundanter Informationen auf ihre Zuverlässigkeit hin überprüft wurden. Dies kann beispielsweise eine abgesicherte Gierrate 44 sein, die anhand des Lenkwinkels 48 plausibilisiert wurde, da der Lenkwinkel 48 und die Gierrate 44 voneinander abhängig sind. Alternativ oder zusätzlich können diese Informationen beispielsweise auch Positionsdaten umfassen, die vom GPS-Empfänger 52 nicht geliefert werden können. Fährt das nicht weiter dargestellte Fahrzeug beispielsweise an Orten an denen keine GPS-Signale empfangen werden können, wie in einem Tunnel, so können beispielsweise durch die Fusionseinrichtung 54 basierend auf den letzten aus dem GPS-Empfänger 52 empfangenen Positionsdaten 50, dem Lenkwinkel 48 und einer aus den Raddrehzahlen 46 abgeleiteten Geschwindigkeit des nicht gezeigten Fahrzeuges die nicht durch den GPS-Empfänger 52 lieferbaren Positionsdaten abgeleitet werden. Die Fusionseinrichtung 54 ist damit eingerichtet, aus im nicht weiter dargestellten Fahrzeug vorhandenen Sensordaten neue Sensordaten zu generieren oder bereits vorhandene Sensordaten beispielsweise durch Plausbilisation abzusichern.

Die durch die Fusionseinrichtung 54 generierten Daten 56 können einerseits in den Datenbus 4 wieder eingespeist oder an ein erstes Filter 58 übergeben werden. Die in den Datenbus 4 eingespeisten generierten Daten 56 stehen dann anderen Modulen zur weiteren Verarbeitung zur Verfügung.

Die an das erste Filter 58 übergebenen generierten Daten können im ersten Filter 58 in einer nicht naher spezifizierten Weise gefiltert und an eine Verteilerantenne 60 mit einem zweiten Filter 62 übergeben werden. Die Verteilerantenne 60 dient der Kommunikation des nicht gezeigten Fahrzeuges mit anderen Fahrzeugen und wird daher nachstehend Car2X-Antenne 60 genannt. Die Kommunikation kann drahtlos erfolgen, wobei ein sogenannten Aomotive WLAN zum Einsatz kommen kann, auf IEEE 802.11p basieren und entsprechend darauf aufbauende weitere Protokollschichten, wie IST-G5 in Europa oder IEEE 1609 in Amerika aufweisen kann. Das erste Filter 62 kann daher gefilterte generierten Daten 56 an die Car2X-Antenne 60 übergeben oder von der Car2X-Antenne 60 Empfangsdaten empfangen.

Die gefilterten generierten Daten 56 oder die Empfangsdaten können als Eingangsdaten für verschiedenste Applikationen 66 eingesetzt werden. Diese Applikationen 66 können beispielsweise die zuvor genannte Ableitung von Positionsdaten umfassen, wenn das GPS-Signal 50 nicht mehr empfangen werden kann. Alternativ oder zusätzlich können diese Applikationen 66 Informationsapplikationen umfassen, die beispielsweise über Staus oder andere Verkehrssituationen oder verkehrsrelevante Verkehrssituationen informieren. Die Applikationen 66 werden nachstehend unter dem Begriff Car2X-Applikationen 66 zusammengefasst, die wiederum ihre Ausgangsdaten 68, also die weitergeführten Positionsdaten oder die Verkehrsinformationen in den Datenbus 4 einspeisen können.

Die oben genannten Schnittstellen 26 bis 33 können in der M2XPro-Vorrichtung 16 in einer Hardwareschnittstelle 70 zusammengefasst sein. Zur Realisierung der anderen Funktionen in der M2XPro-Vorrichtung 16 können weitere Hardwareelemente 72 vorgesehen sein.

Die Ausgangsdaten 68, wie die weitergeführten Positionsdaten oder die Verkehrsinformationen können beispielsweise auf dem HMI-Gerät 14 zur Navigation angezeigt werden.

Die Eingangsdaten 64 oder die generierten Daten 56 können an andere Module im nicht dargestellten Fahrzeug verteilt werden, die ihrerseits über Car2X-Applikationen 66 verfügen können. In der vorliegenden Ausführung ist dies anhand des ESC-Steuergerätes 6 dargestellt. Ferner können in den einzelnen Steuergeräten 6 bis 12 noch System Algorithmen 74 vorhanden, die die generierten Daten 56 direkt benutzen.

In der vorliegenden Ausführung werden die Raddrehzahlen 46 und der Lenkwinkel 48 entsprechend mit dem ESC-Steuergerät 6 und dem EPS-Steuergerät 8 erfasst, die diese Daten für ihre vorgesehene Funktion ohnehin erfassen müssen.

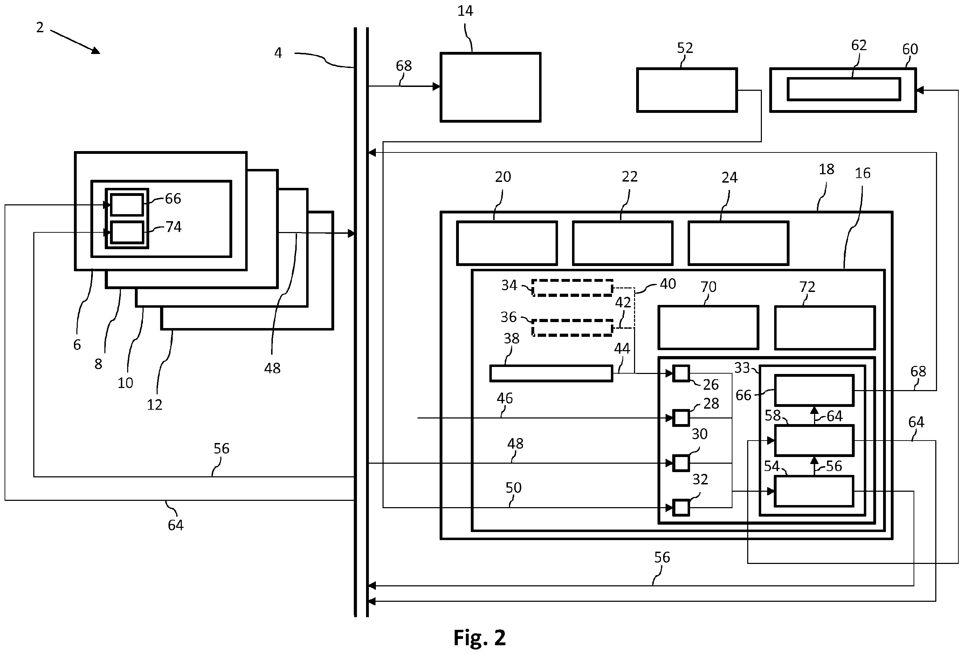

Es wird auf Fig. 2 Bezug genommen eine schematische Ansicht eines Ausschnittes aus einem alternativen Fahrzeugbordnetz 2 zeigt.

In Fig. 2 werden die Raddrehzahlen 46 aus den einzelnen nicht weiter dargestellten Raddrehzahlsensoren direkt in die M2XPro-Vorrichtung 16 eingespeist. Sie können dann beispielsweise als generierte Daten 56 in die System Algorithmen 74 des ESC-Steuergerätes 6 eingespeist werden, so dass sie für die Grundfunktionalität des ESC-Steuergerätes 6 zur Verfügung stehen.

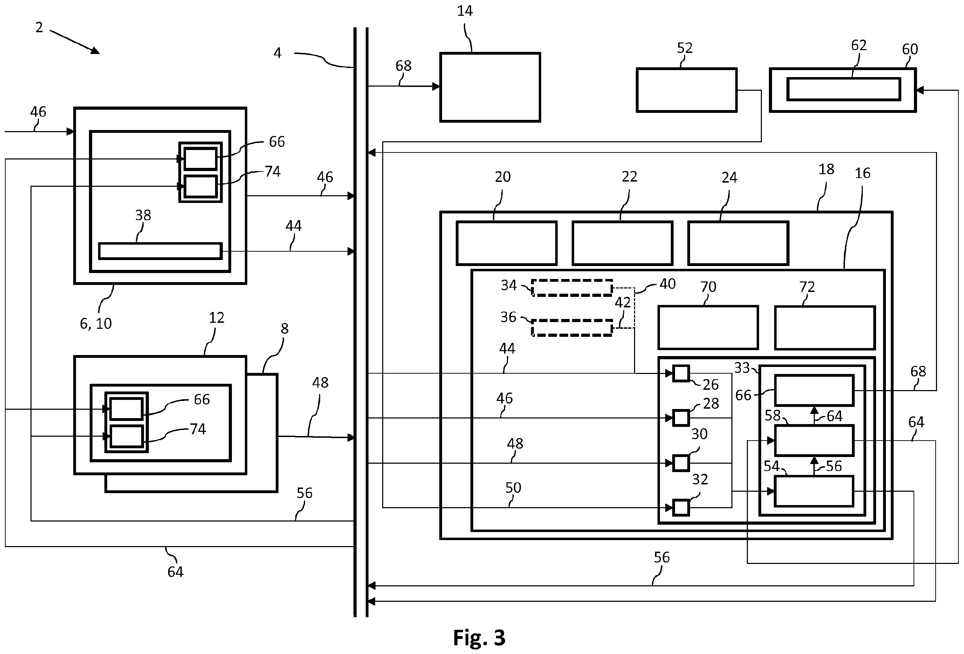

Es wird auf Fig. 3 Bezug genommen eine schematische Ansicht eines Ausschnittes aus einem alternativen Fahrzeugbordnetz 2 zeigt.

In Fig. 3 ist der Gierratensensor 38 im ESC-Steuergerät 6 untergebracht. Er kann alternativ auch im Airback-Steuergerät 10 untergebracht sein. Die Gierrate 44 wir daher über den Datenbus 4 in die M2XPro-Vorrichtung 12 eingespeist. In gleicher Weise können auch der nicht weiter dargestellte Längs-, Quer- und Vertikalbeschleunigungssensor im ESC-Steuergerät 6 oder im Airback-Steuergerät 10 untergebracht sein und entsprechend die Längs-, Quer- und Vertikalbeschleunigung über den Datenbus 4 in die Fahrdynamikschnittstelle 26 der M2XPro-Vorrichtung 12 einspeisen.

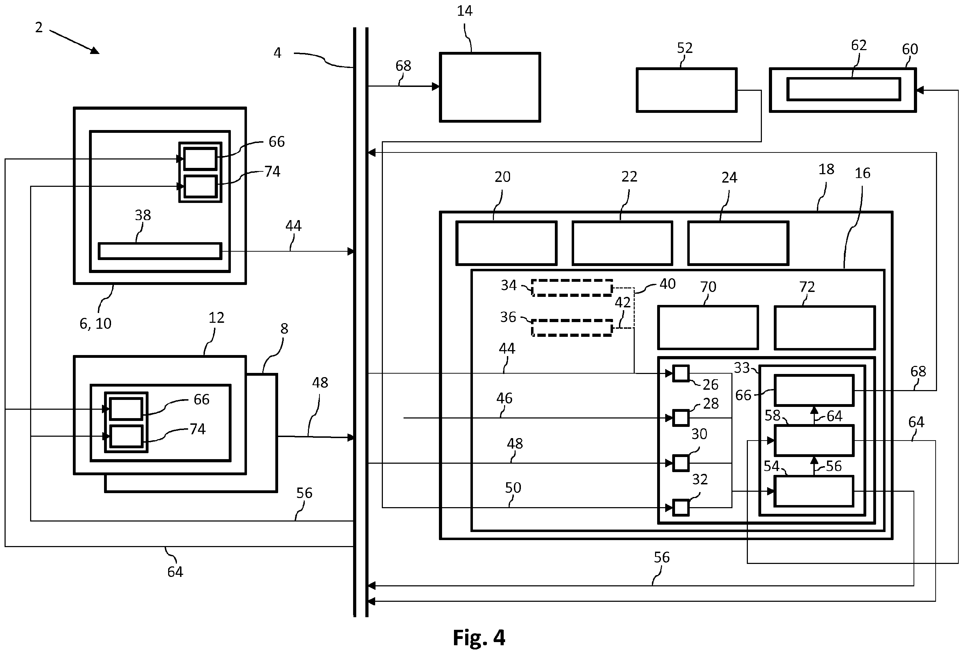

Es wird auf Fig. 4 Bezug genommen, die eine schematische Ansicht eines Ausschnittes aus einem alternativen Fahrzeugbordnetz 2 zeigt.

Die Ausführung der Fig. 4 basiert auf der Ausführung gemäß Fig. 3, wobei die Raddrehzahlen 46 wieder analog zu Fig. 2 direkt der M2XPro-Vorrichtung 16 zugeführt werden können.

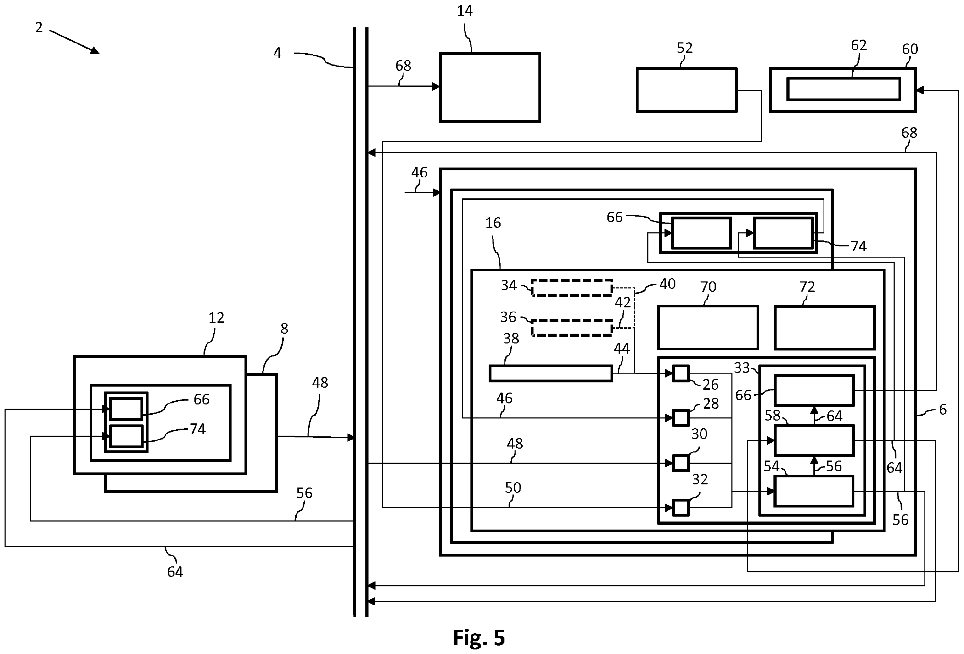

Es wird auf Fig. 5 Bezug genommen, die eine schematische Ansicht eines Ausschnittes aus einem alternativen Fahrzeugbordnetz 2 zeigt.

In Fig. 5 ist die M2XPro-Vorrichtung 16 im ESC-Steuergerät 6 untergebracht. Auf diese Weise können die Raddrehzahlen 46 intern im ESC-Steuergerät 6 an die M2XPro-Vorrichtung 12 geleitet werden.

Ferner entfällt der M2XPro-Cluster 18 mit seinen Hardwarekomponenten 20, 22, 24 vollständig.

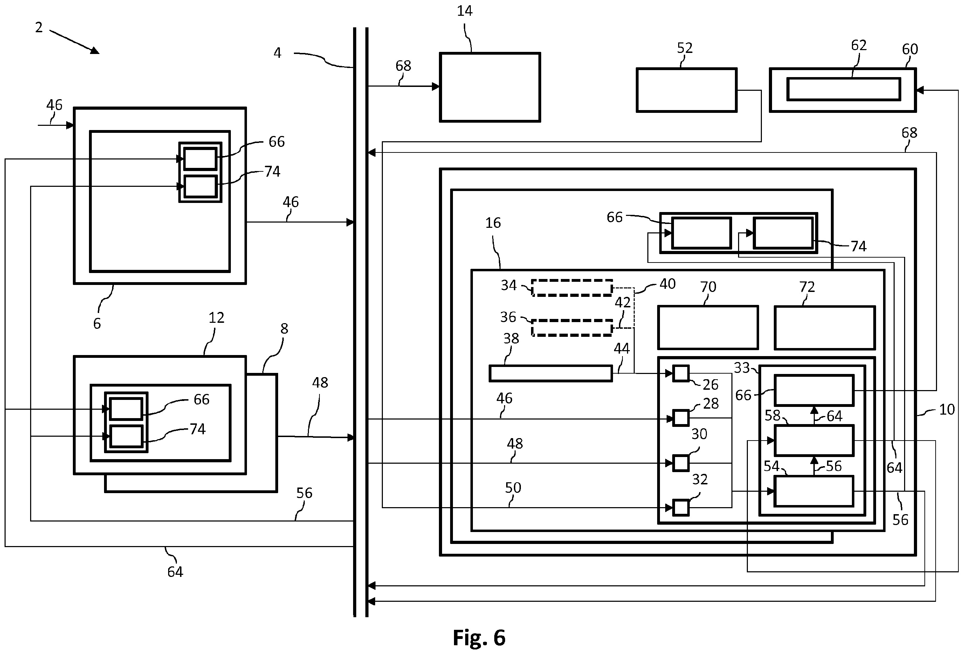

Es wird auf Fig. 6 Bezug genommen, die eine schematische Ansicht eines Ausschnittes aus einem alternativen Fahrzeugbordnetz 2 zeigt.

Wie aus Fig. 6 ersichtlich, kann die M2XPro-Vorrichtung 16 in jedem beliebigen Steuergerät des nicht weiter dargestellten Fahrzeuges untergebracht sein, was beispielhaft am Airback-Steuergerät 10 verdeutlicht ist.

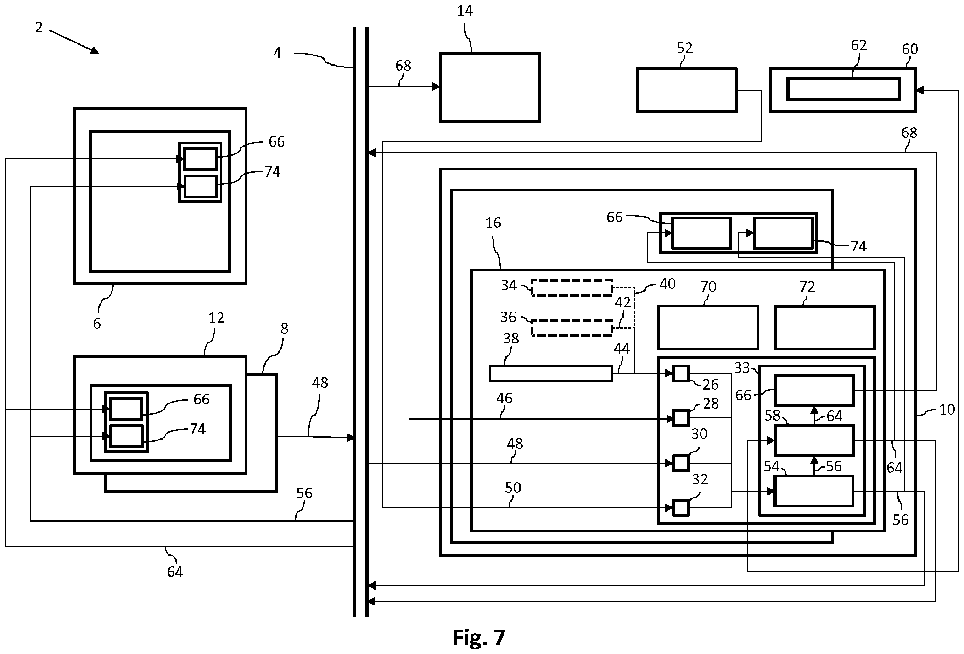

Es wird auf Fig. 7 Bezug genommen, die eine schematische Ansicht eines Ausschnittes aus einem alternativen Fahrzeugbordnetz 2 zeigt.

Die Ausführung der Fig. 7 basiert auf der Ausführung gemäß Fig. 6, wobei die Raddrehzahlen 46 wieder analog zu Fig. 2 direkt der M2XPro-Vorrichtung 16 zugeführt werden können.

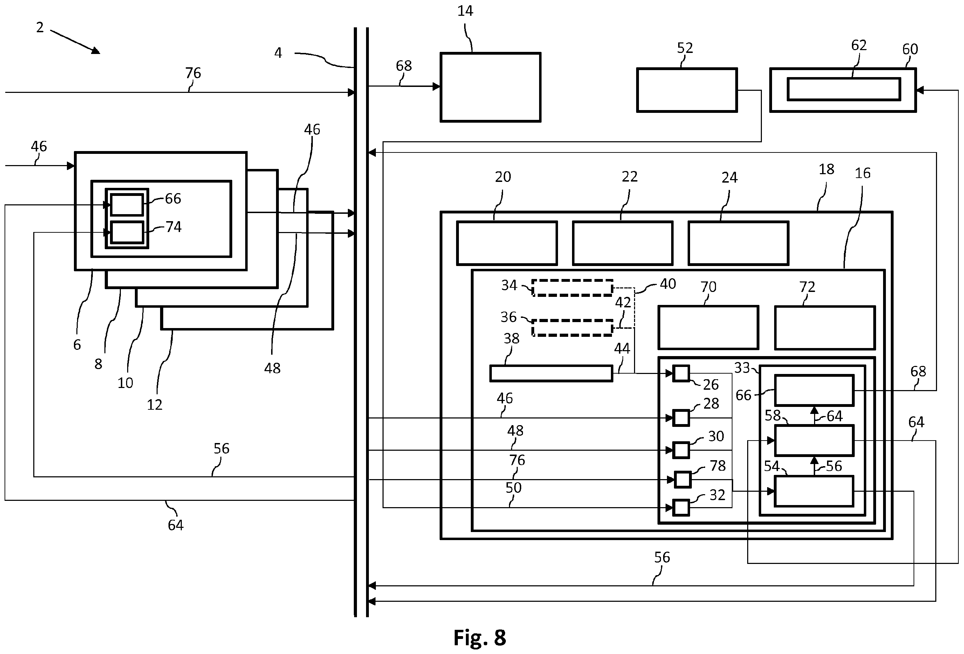

Es wird auf Fig. 8 Bezug genommen, die eine schematische Ansicht eines Ausschnittes aus einem alternativen Fahrzeugbordnetz 2 zeigt.

In der Ausführung der Fig. 8 werden in den Datenbus 4 zusätzliche Sensorsignale 76 eingespeist, die dann über eine Zusatzschnittstelle 78 in der M2XPro-Vorrichtung 16 empfangen und in der Fusionseinrichtung 54 mit verarbeitet werden können.

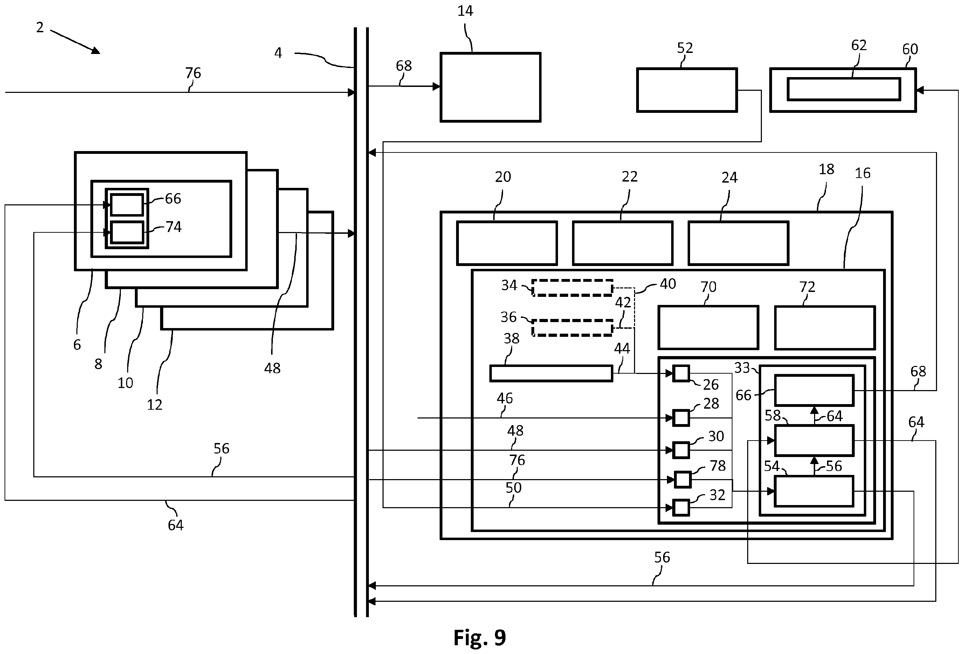

Es wird auf Fig. 9 Bezug genommen, die eine schematische Ansicht eines Ausschnittes aus einem alternativen Fahrzeugbordnetz 2 zeigt.

Die Ausführung der Fig. 9 basiert auf der Ausführung gemäß Fig. 8, wobei die Raddrehzahlen 46 wieder analog zu Fig. 2 direkt der M2XPro-Vorrichtung 16 zugeführt werden können.

Mit den vorgeschlagenen Architekturen wird die Fusionseinrichtung 54 und die zu dessen Funktionen notwendige Software und Hardware leicht in die Architektur des nicht weiter dargestellten Fahrzeugs integriert. Dazu wird beispielsweise eine eigene Einheit in Form des M2XPro-Clusters 18 verwendet oder bereits bestehende Steuergeräte 6 bis 12 genutzt. Zudem können die für die Fusion benötigten Signale, die beispielsweise aus den GPS-Signalen 50, den Fahrdynamiksignalen 40, 42, 44, den Raddrehzahlsensoren 46 und dem Lenkwinkel 48 bestehen können, der M2XPro-Vorrichtung 16 in Echtzeit zugeführt werden, was beispielsweise durch den Datenbus 4 gewährleistet ist. Schließlich stellt die M2XPro-Vorrichtung 16 als ein Host die Möglichkeit dar, M2XPro-Applikationen 66 auszuführen uns so weitere Software zu integrieren.

Wie bereits erwähnt kann die M2XPro-Vorrichtung 16 in einem eigenen Cluster 18 oder aber in einem bereits bestehenden Modul des nicht gezeigten Fahrzeuges, wie beispielsweise eines der Steuergeräte 6 bis 12 untergebracht werden. Wie anhand der Raddrehzahlen 46 ersichtlich, können einzelne Sensorsignale der M2XPro-Vorrichtung 16 entweder direkt oder über ein bereits bestehendes Steuergerät 6 bis 12 zugeführt werden, das das entsprechende Sensorsignal ohnehin selbst verwendet. Auch können, wie anhand der Inertialsensoren 34 bis 38 ersichtlich, einzelne Sensoren selbst in der M2XPro-Vorrichtung 16 untergebracht werden.

In den vorliegenden Ausführungen ist allen Architekturen ähnlich, dass ein Datenbus 6 die Daten der außerhalb der M2XPro-Vorrichtung 12 verteilten Sensoren verteilt. Ein nicht weiter dargestellter und an das ESP-Steuergerät 8 angeschlossener Lenkwinkelsensor legt den Lenkwinkel ferner immer auf den Datenbus 6. Die GPS-Antenne 52 und die Car2X-Antenne 60 können in nicht weiter dargestellter Weise in einem gemeinsamen Antennenmodul zusammengefasst sein und eine gemeinsame Schnittstelle zur M2XPro-Vorrichtung 16 aufweisen. In der M2XPro-Vorrichtung sind Car2X-Applikationen 66 untergebracht, die beispielsweise nicht sicherheitskritische Auswertungen für die HMI-Einheit 14 wahrnehmen. Demgegenüber sind in den einzelnen Steuergeräten 6 bis 12 Car2X-Applikationen 66 untergebracht, die für die Funktion der jeweiligen Steuergeräte 6 bis 12 sinnvoll sind, wie beispielsweise die Absicherung von Messdaten basierend auf redundant vorliegenden Messdaten aus anderen Sensoren.

## Patentansprüche

1. Bordnetz (2) für ein Fahrzeug umfassend einen Datenbus (4), einen an den Datenbus (4) angeschlossenen Sensor (34 bis 38, 52), der eingerichtet ist, Sensordaten (40 bis 50, 76) in den Datenbus (4) einzuspeisen, eine an den Datenbus (4) angeschlossene Vorrichtung (16) zum Verteilen wenigstens von Daten (56, 64, 68) über das Fahrzeug basierend auf den Sensordaten (40 bis 50, 76), eine als Car2X-Antenne ausgebildete Antenne (60) zum drahtlosen Übertragen der Daten (56, 64, 68) über das Fahrzeug sowie eine GPS-Antenne (52), wobei die Vorrichtung (16)
- eine erste Sensordaten-Empfangsschnittstelle (26 bis 32, 78) zum Empfangen von ersten Sensordaten (40 bis 50, 76) aus einem ersten Sensor (34 bis 38, 52),
- eine zweite Sensordaten-Empfangsschnittstelle (26 bis 32, 78) zum Empfangen von zweiten Sensordaten (40 bis 50, 76) aus einem zweiten Sensor (34 bis 38, 52), und
- eine Sende-Schnittstelle (33) zum Übertragen der Daten (56, 64, 68) über das Fahrzeug basierend auf den ersten Sensordaten (40 bis 50, 76) und den zweiten Sensordaten (40 bis 50, 76) an einen Empfänger (6 bis 12, 60) umfasst, **dadurch gekennzeichnet, dass**
die GPS-Antenne (52) und die Car2X-Antenne (60) in einem gemeinsamen Antennenmodul zusammengefasst sind und eine gemeinsame Schnittstelle zur Vorrichtung (16) aufweisen.

2. Bordnetz (2) nach Anspruch 1, wobei die erste Sensordaten-Empfangsschnittstelle (26 bis 32, 78) zum Empfangen von Positionsdaten (50) aus der GPS-Antenne (52) als ersten Sensor (34 bis 38, 52) vorgesehen ist.

3. Bordnetz (2) nach Anspruch 1 oder 2, wobei die Daten (56, 64, 68) über das Fahrzeug eine Bewegung des Fahrzeugs beschreibende Bewegungsdaten (68) sind.

4. Bordnetz (2) nach einem der vorstehenden Ansprüche, wobei die zweite Sensordaten-Empfangsschnittstelle (26 bis 32, 78) eine Datenbus-Schnittstelle zum Empfangen der zweiten Sensordaten (40 bis 50, 76) aus dem zweiten Sensor (34 bis 38, 52) aufweist, der an den Datenbus (4) angeschlossen ist.

5. Bordnetz (2) nach einem der vorstehenden Ansprüche, wobei die zweiten Sensordaten (40 bis 50, 76) Lenkwinkeldaten (48) aus einem Lenkwinkelsensor als zweiter Sensor (34 bis 38, 52) sind.

6. Bordnetz (2) nach einem der vorstehenden Ansprüche, wobei die Sende-Schnittstelle (33) eine Fusionseinrichtung (54) zum Verknüpfen der ersten Sensordaten (40 bis 50, 76) und der zweiten Sensordaten (40 bis 50, 76) umfasst.

7. Bordnetz (2) nach Anspruch 6, wobei die Sendeschnittstelle (33) ein Filter (58) zum Filtern der Daten (56) über das Fahrzeug aus den verknüpften Positionsdaten (50) und Sensordaten (40 bis 48, 76) umfasst.

8. Fahrzeug umfassend ein Bordnetz (2) nach einem der vorhergehenden Ansprüche.

## Claims

1. Vehicle electrical system (2) for a vehicle, comprising a databus (4), a sensor (34 to 38, 52) which is connected to the databus (4) and is configured to feed sensor data (40 to 50, 76) into the databus (4), a device (16) which is connected to the databus (4) and has the purpose of distributing at least data (56, 64, 68) about the vehicle based on the sensor data (40 to 50, 76), an antenna (60) which is embodied as a Car2X antenna and which has the purpose of transmitting the data (56, 64, 68) about the vehicle in a wireless fashion and a GPS antenna (52), wherein the device (16) comprises
- a first sensor data receiving interface (26 to 32, 78) for receiving first sensor data (40 to 50, 76) from a first sensor (34 to 38, 52),
- a second sensor data receiving interface (26 to 32, 78) for receiving second sensor data (40 to 50, 76) from a second sensor (34 to 38, 52), and
- a transmitting interface (33) for transmitting the data (56, 64, 68) about the vehicle based on the first sensor data (40 to 50, 76) and the second sensor data (40 to 50, 76) to a receiver (6 to 12, 60),
**characterized in that**
the GPS antenna (52) and the Car2X antenna (60) are combined in a common antenna module and have a common interface to the device (16).

2. Vehicle electrical system (2) according to Claim 1, wherein the first sensor data receiving interface (26 to 32, 78) is provided for receiving position data (50) from the GPS antenna (52) as a first sensor (34 to 38, 52).

3. Vehicle electrical system (2) according to Claim 1 or 2, wherein the data (56, 64, 68) about the vehicle are movement data (68) describing a movement of the vehicle.

4. Vehicle electrical system (2) according to one of the preceding claims, wherein the second sensor data receiving interface (26 to 32, 78) comprises a databus interface for receiving the second sensor data (40 to 50, 76) from the second sensor (34 to 38, 52) which is connected to the databus (4).

5. Vehicle electrical system (2) according to one of the preceding claims, wherein the second sensor data (40 to 50, 76) are steering angle data (48) from a steering angle sensor as a second sensor (34 to 38, 52).

6. Vehicle electrical system (2) according to one of the preceding claims, wherein the transmitting interface (33) comprises a fusion device (54) for linking the first sensor data (40 to 50, 76) and the second sensor data (40 to 50, 76).

7. Vehicle electrical system (2) according to Claim 6, wherein the transmitting interface (33) comprises a filter (58) for filtering the data (56) about the vehicle from the linked position data (50) and sensor data (40 to 48, 76).

8. Vehicle comprising a vehicle electrical system (2) according to one of the preceding claims.

## Revendications

1. Réseau de bord (2) pour véhicule, comprenant un bus de données (4), un capteur (34 à 38, 52) qui est relié au bus de données (4) et qui est conçu pour injecter des données de capteur (40 à 50, 76) dans le bus de données (4), un dispositif (16) qui est relié au bus de données (4) pour distribuer au moins des données (56, 64, 68) relatives au véhicule sur la base des données de capteur (40 à 50, 76), une antenne (60) réalisée sous la forme d'une antenne Car2X pour transmettre sans fil les données (56, 64, 68) relatives au véhicule et une antenne GPS (52), dans lequel le dispositif (16) comprend
- une première interface de réception de données de capteur (26 à 32, 78) pour recevoir des premières données de capteur (40 à 50, 76) d'un premier capteur (34 à 38, 52),
- une deuxième interface de réception de données de capteur (26 à 32, 78) pour recevoir des deuxièmes données de capteur (40 à 50, 76) d'un deuxième capteur (34 à 38, 52), et
- une interface de transmission (33) pour transmettre à un récepteur (6 à 12, 60) les données (56, 64, 68) relatives au véhicule sur la base des premières données de capteur (40 à 50, 76) et des deuxièmes données de capteur (40 à 50, 76),
**caractérisé en ce que** l'antenne GPS (52) et l'antenne Car2X (60) sont combinées en un module d'antenne commun et comportent une interface commune avec le dispositif (16) .

2. Réseau de bord (2) selon la revendication 1, dans lequel la première interface de réception de données de capteur (26 à 32, 78) est prévue en tant que premier capteur (34 à 38, 52) pour recevoir des données de position (50) de l'antenne GPS (52).

3. Réseau de bord (2) selon la revendication 1 ou 2, dans lequel les données (56, 64, 68) relatives au véhicule sont des données de déplacement (68) décrivant un déplacement du véhicule.

4. Réseau de bord (2) selon l'une des revendications précédentes, dans lequel la deuxième interface de réception de données de capteur (26 à 32, 78) comporte une interface de bus de données, qui est raccordée au bus de données (4), pour recevoir les deuxièmes données de capteur (40 à 50, 76) du deuxième capteur (34 à 38, 52).

5. Réseau de bord (2) selon l'une des revendications précédentes, dans lequel les deuxièmes données de capteur (40 à 50, 76) sont des données d'angle de braquage (48) d'un capteur d'angle de braquage en tant que deuxième capteur (34 à 38, 52).

6. Réseau de bord (2) selon l'une des revendications précédentes, dans lequel l'interface de transmission (33) comprend un moyen de fusion (54) destiné à combiner les premières données de capteur (40 à 50, 76) et les deuxièmes données de capteur (40 à 50, 76).

7. Réseau de bord (2) selon la revendication 6, dans lequel l'interface de transmission (33) comprend un filtre (58) destiné à filtrer les données (56) relatives au véhicule à partir des données de position (50) et des données de capteur (40 à 48, 76) combinées.

8. Véhicule comprenant un réseau de bord (2) selon l'une des revendications précédentes.
